# EUROPÄISCHE PATENTSCHRIFT

(11) **EP 0 536 622 B1**
(45) Veröffentlichungstag und Bekanntmachung des Hinweises auf die Patenterteilung: **26.07.1995**
(21) Anmeldenummer: 92116615.3
(22) Anmeldetag: 29.09.1992
(51) Int. Cl.: B25D 17/26, B23Q 11/12, F16H 57/04, F16N 11/00

(54) **Bohrhammer mit Fettschmierung**
Impact hammer with grease lubrification
Marteau de forage avec lubrification de graisse

(30) Priorität: 05.10.1991 DE 4133236
(43) Veröffentlichungstag der Anmeldung: 14.04.1993
(73) Patentinhaber: ROBERT BOSCH GMBH, 70442 Stuttgart (DE)
(72) Erfinder: Mütschele, Hans-Ulrich, Dipl.-Ing., W-7000 Stuttgart 70 (DE); Schindler, Harald, W-7000 Stuttgatt 75 (DE)

(56) Entgegenhaltungen:
- WO-A-88/01219
- DE-A- 3 402 294

## Beschreibung

### Stand der Technik

Die Erfindung geht aus von einem Bohrhammer nach dem Oberbegriff des Anspruchs 1. Solche Hämmer, wie beispielsweise nach der EP 318 480 B2, weisen schnellaufende Elektromotoren auf, deren Drehmoment über ein Motorritzel und ein Getriebe auf den Werkzeughalter bzw. auf das Schlagwerk übertragen wird. Insbesondere vom Schlagwerk gehen meist auf einzelne Zähne gerichtete Rückwirkungen auf das Motorritzel und das damit kämmende Zahnrad aus. Diese Zahnräder sind daher besonders stark beansprucht und müssen ständig gut geschmiert sein, um Getriebeschäden zu vermeiden.

### Vorteile der Erfindung

Der erfindungsgemäße Bohrhammer mit dem kennzeichnenden Merkmal des Anspruchs 1 hat demgegenüber den Vorteil, daß mit geringem baulichem Aufwand und ohne zusätzliche Wartungshandgriffe eine wiederholte Nachschmierung der Zahnräder erfolgt. Dies wird durch die Schaltbewegung eines Betriebsartenumschalters bewirkt, die gleichzeitig dem Getriebe Schmiermittel zuführt. Bei den Umschaltvorgängen durch die Bedienungsperson wird automatisch frisches Fett in die Zähne eines vorzugsweise mit dem Motorritzel kämmenden Zahnrades gepreßt. Damit ist auf Lebensdauer des Gerätes eine ausreichende und zuverlässige Schmierung an den besonders gefährdeten Stellen gewährleistet. Die Erfindung hat den weiteren Vorteil, daß der Fettsumpf verkleinert und die beizugebende Fettmenge verringert werden kann.

Durch die in den abhängigen Ansprüchen aufgeführten Maßnahmen sind vorteilhafte Weiterbildungen und Verbesserungen des im Anspruch 1 angegebenen Bohrhammers möglich. Besonders vorteilhaft ist es, wenn das Schmierglied an dem Umschalter an die äußere Form des Zahnkranzes des betreffenden Zahnrades angepaßt ist. Besonders wirkungsvoll ist die Schmiervorrichtung, wenn sich das Schmierglied großflächig über einen großen Winkel des Zahnkranzes erstreckt. Das Schmierglied wird am einfachsten direkt mit der Schaltgabel oder einem ähnlichen vorzugsweise translatorisch bewegten Schaltelement verbunden. Das Schmierglied kann auch einstückig mit der Schaltgabel ausgebildet sein. Gute Schmierergebnisse werden erzielt, wenn das Schmierglied direkt auf ein mit dem Motorritzel kämmendes Zahnrad hin gerichtet ist. Wenn als Betriebsartenumschalter der Schalter zum Umschalten des Hammers von Schlag- in Drehbohrbetrieb verwendet wird, hat dies den Vorteil, daß ein relativ großer Schaltweg zur Verfügung steht. Es können jedoch auch andere Umschalter wie z. B. Rechts-Links-Laufumschalter oder ggf. auch der Ein-Aus-Schalter mit der Schmiereinrichtung ausgestattet werden.

### Zeichnung

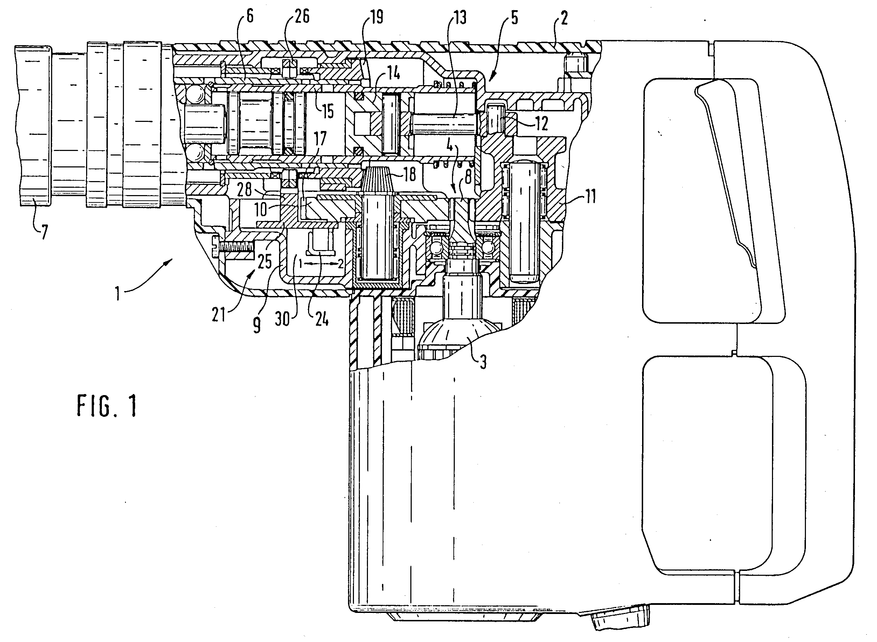

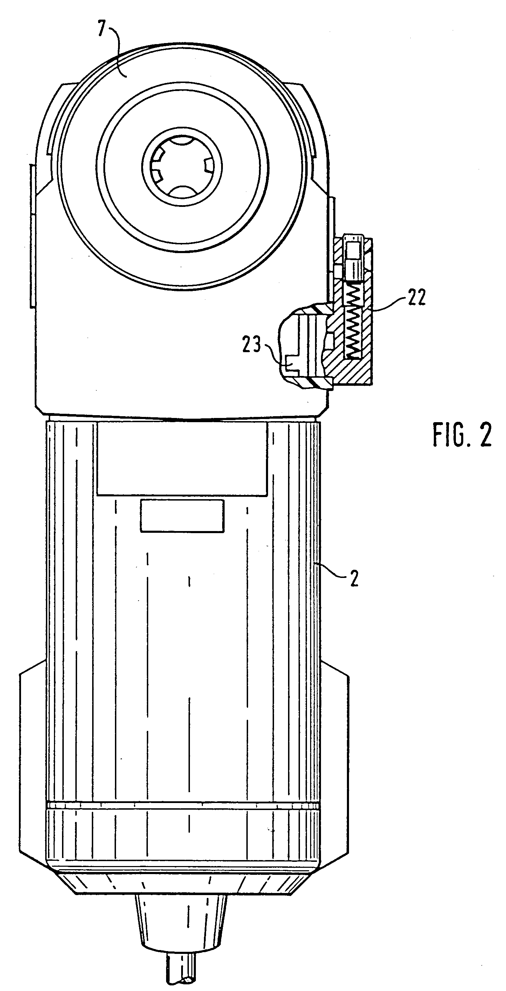

Ein Ausführungsbeispiel der Erfindung ist in der Zeichnung dargestellt und in der nachfolgenden Beschreibung näher erläutert. Figur 1 zeigt einen Teilquerschnitt durch einen Bohrhammer. Figur 2 zeigt eine Vorderansicht mit einem Schaltgriff. Figur 3 zeigt eine Draufsicht auf die Schmiervorrichtung.

### Beschreibung des Ausführungsbeispiels

Ein Bohrhammer 1 hat ein Gehäuse 2, in dem ein elektrischer Motor 3, ein damit verbundenes Getriebe 4, ein Schlagwerk 5 und eine Drehantriebshülse 6 untergebracht sind. Die Drehantriebshülse 6 steht in Verbindung mit einem Werkzeughalter 7, in den schlagende und/oder drehbohrende Werkzeuge eingesetzt werden können.

Der Motor 3 weist ein Motorritzel 8 auf, das in ein nach unten geschlossenes Getriebegehäuse 9 hineinragt. In diesem ist ein erstes Zahnrad 10 für den Drehantrieb sowie ein Zweites Zahnrad 11 zum Antrieb des Schlagwerks 5 gelagert, die beide mit dem Motorritzel 8 kämmen. Das Zahnrad 11 ist verbunden mit einem Exzenter 12 und einer Pleuelstange 13, die einen hin- und hergehenden Kolben 14 antreibt. Der Kolben 14 ist in einem Zylinderrohr 15 geführt, das innerhalb der Drehantriebshülse 6 liegt. Im übrigen weist das Schlagwerk 5 alle bei Bohrhämmern bekannten Einzelteile auf.

Das erste Zahnrad 10 dient der Untersetzung des mit hoher Drehzahl laufenden Motors 3 und trägt einen Zahnkranz 17 mit großem Durchmesser, der in das Motorritzel 8 eingreift, sowie eine weitere Verzahnung 18, die mit einer Zahnhülse 19 kämmt, die mittels eines Umschalters 21 zur Wahl der Betriebsart an die Drehantriebshülse 6 angekoppelt werden kann.

Mit dem Umschalter 21 läßt sich der Drehantrieb auf den Werkzeughalter 7 zu- oder abschalten. Dieser besteht aus einem aus dem Gehäuse 2 hervorstehenden Schaltgriff 22, der einen nach innen weisenden exzentrischen Nocken 23 aufweist, der in eine Federgabel 24 des Umschalters 21 eingreift. Die Federgabel 24 ist nachgiebig verbunden mit einer Schaltgabel 25, die auf einen an sich bekannten Schaltring 26 einwirkt. Der Schaltring 26 stellt eine drehfeste Verbindung zwischen der Zahnhülse 19 und der Drehantriebshülse 6 her bzw. unterbricht diese Verbindung.

An der Schaltgabel 25 ist ein Schmierglied 28 angebracht, welches dem Zahnrad 10 zugewandt eine kreisbogenförmige Kontur 29 aufweist. Das Schmierglied 28 kann mit der Schaltgabel 25 einstückig ausgebildet und aus Kunststoff gefertigt sein.

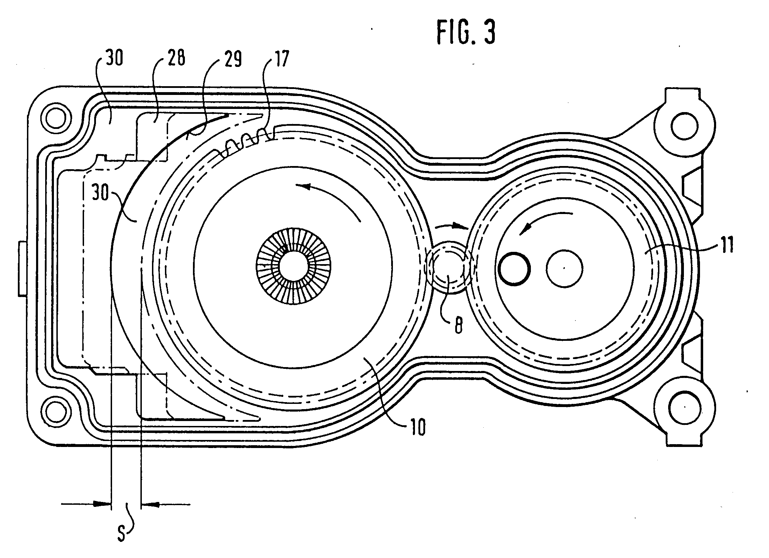

Die Kontur 29 entspricht im Ausführungsbeispiel einem Zylindermantelabschnitt, der das Zahnrad 17 mit Spiel einhüllt. Die Kontur kann aber beispielsweise bei der Verwendung von Kegelrädern auch konisch ausgebildet sein. In Figur 3 ist das Schmierglied 28 in seiner dem Zahnrad 10 weiter entfernten Stellung durchgezogen und in seiner dem Zahnrad 10 nahen Stellung gestrichelt gezeichnet. Die Distanz zwischen den beiden Stellungen ist als Schaltweg S bezeichnet. Der Raum innerhalb des nach unten abgeschlossenen Getriebegehäuses 9, der um die Schaltgabel 25 und um das Schmierglied 28 herum gebildet ist, dient als Schmiermittelsumpf 30 und wird bei der Montage des Hammers mit Schmierfett gefüllt. Das zumindest nach unten geschlossene und das Zahnrad 10 weitgehend umschließende Getriebegehäuse 9 verhindert ein Auslaufen des Fettes.

Bei der Benutzung des Bohrhammers 1 kommt es immer wieder zur Betätigung des Umschalters 21, um abwechselnd mit drehbohrenden Werkzeugen oder mit rein schlagend bewegten Meißelwerkzeugen zu arbeiten. Jedesmal, wenn die Drehantriebshülse 6 hinzugeschaltet wird, wird das Schmierglied 28 zusammen mit der Schaltgabel 25 um den Schaltweg S auf das Zahnrad 10 hin bewegt, wobei sich zwischen der Kontur 29 und dem Außenumfang des Zahnrades 10 mehr oder minder statistisch verteiltes Fett zwischen die Zähne des Zahnkranzes 17 geschoben wird. Von dort gelangt das Fett zu dem schnell drehenden Motorritzel 8, wo eine gute Schmierung insbesondere erforderlich ist. Vom Motorritzel 8 wird der Schmierstoff weiter auf das zweite Zahnrad 11 für den Schlagwerksantrieb getragen. Somit wird bei jedem Schaltvorgang automatisch für eine Nachschmierung aller mit dem Motorritzel 8 kämmender Getriebeteile gesorgt.

Beim Zurückschalten des Betriebsartenumschalters 21 wird wiederum Fett aus dem Fettsumpf 30, das nun sich hinter dem Schieber, auf der der Kontur 29 abgewandten Seite angesammelt hat, in den Zwischenraum zwischen Zahnrad 10 und Schmierglied 28 hineingedrückt, um für den nächsten Schmiervorgang zur Verfügung zu stehen.

## Patentansprüche

1. Bohrhammer mit einem Gehäuse (2), mit einem darin untergebrachten Motor (3), der sein Drehmoment über ein Getriebe (4) an einem Werkzeughalter (7) abgibt und mit einem Umschalter (21) zur Vorwahl verschiedener Betriebsarten des Bohrhammers, welcher Umschalter (21) einen von außen zugänglichen Schaltgriff (22) aufweist, dadurch gekennzeichnet, daß der Umschalter (21) mit einem Schmierglied (28) verbunden ist, das in einen Schmiermittelsumpf (30) eingetaucht ist und das beim Umschalten mittels des Umschalters (21) eine Bewegung relativ zu einem Getriebeglied des Getriebes (4), beispielsweise einem Zahnrad (10), ausführt und bei einer Bewegung in Richtung auf das Getriebe zu Schmiermittel zum Getriebeglied fördert.

2. Bohrhammer nach Anspruch 1, dadurch gekennzeichnet, daß das Schmierglied (28) eine Kontur (29) aufweist, die an die Form eines Zahnkranzes (17) des Zahnrades (10) angepaßt ist.

3. Bohrhammer nach Anspruch 1 oder 2, dadurch gekennzeichnet, daß das Schmierglied (28) mit einer Schaltgabel (25) des Umschalters (21) verbunden ist.

4. Bohrhammer nach Anspruch 1, 2 oder 3, dadurch gekennzeichnet, daß das Schmierglied (28) auf ein direkt mit dem Motorritzel (8) kämmendes Zahnrad (10, 11) hin gerichtet ist.

5. Bohrhammer nach einem der vorhergehenden Ansprüche, dadurch gekennzeichnet, daß der Schmiermittelsumpf (30) innerhalb eines in Gebrauchslage des Hammers zumindest nach unten geschlossenen Getriebegehäuses (9) angeordnet ist.

6. Bohrhammer nach einem der vorhergehenden Ansprüche, dadurch gekennzeichnet, daß der Umschalter (21) zum Umschalten des Hammers zwischen Drehbohr- und reinem Schlagbetrieb dient.

## Claims

1. Rotary hammer having a housing (2), a motor (3) which is accommodated therein and transmits its torque via a gear unit (4) to a tool holder (7), and a change-over switch (21) for preselecting various modes of operation of the rotary hammer, which change-over switch (21) has a selector (22) accessible from outside, characterized in that the change-over switch (21) is connected to a lubricating member (28) which is immersed in a lubricant sump (30) and, during the change-over by means of the change-over switch (21), performs a movement relative to a gear-unit member of the gear unit (4), for example a gear wheel (10) and, during a movement in the direction of the gear unit, feeds lubricant to the gear-unit member.

2. Rotary hammer according to Claim 1, characterized in that the lubricating member (28) has a contour (29) which is adapted to the shape of a toothed rim (17) of the gear wheel (10).

3. Rotary hammer according to Claim 1 or 2, characterized in that the lubricating member (28) is connected to a switching fork (25) of the change-over switch (21).

4. Rotary hammer according to Claim 1, 2 or 3, characterized in that the lubricating member (28) is directed towards a gear wheel (10, 11) directly meshing with the motor pinion (8).

5. Rotary hammer according to one of the preceding claims, characterized in that the lubricant sump (30) is arranged inside a gear case (9) closed at least at the bottom in the position of use of the hammer.

6. Rotary hammer according to one of the preceding claims, characterized in that the change-over switch (21) serves to change over the hammer between rotary-drilling and pure percussion operation.

## Revendications

1. Perforateur comprenant un boîtier (2) logeant un moteur (3) qui transmet son couple par une transmission (4) à un porte-outil (7) ainsi qu'un commutateur (21) pour présélectionner les différents modes de fonctionnement du perforateur, ce commutateur (21) ayant une poignée de commutation (22) en saillie vers l'extérieur, caractérisé en ce que le commutateur (21) est relié à un élément de graissage (28) plongeant dans une réserver de graisse (30) et lors de la commutation par le commutateur (21) il effectue un mouvement relatif par rapport à un élément de la transmission (4), par exemple une roue dentée (10) et transfère, lors d'un mouvement de direction de la transmission, de la graisse vers l'élément de transmission.

2. Perforateur selon la revendication 1, caractérisé en ce que l'élément de graissage (28) a un contour (29) adapté à la forme d'une couronne dentée (17) de la roue dentée (10).

3. Perforateur selon la revendication 1 ou 2, caractérisé en ce que l'élément de graissage (28) est relié à une fourche de commutation (25) du commutateur (21).

4. Perforateur selon la revendication 1, 2 ou 3, caractérisé en ce que l'élément de graissage (28) est dirigé sur une roue dentée (10, 11) engrenant directement avec le pignon (8) du moteur.

5. Perforateur selon l'une des revendications précédentes, caractérisé en ce que la réserve de graisse (30) est prévue à l'intérieur du boîtier de transmission (9) qui est fermé vers le bas lorsque le perforateur est en position d'utilisation.

6. Perforateur selon l'une des revendications précédentes, caractérisé en ce que le commutateur (21) sert à commuter le perforateur entre le mode de perçage et le mode de percussion simple.
